# EUROPÄISCHE PATENTSCHRIFT

(11) **EP 1 100 604 B1**
(45) Veröffentlichungstag und Bekanntmachung des Hinweises auf die Patenterteilung: **18.12.2002**
(21) Anmeldenummer: 99938256.7
(22) Anmeldetag: 15.07.1999
(51) Int. Cl.: B01D 29/01

(54) **VERFAHREN ZUR STOFFLICHEN TRENNUNG VON FLÜSSIGKEITS-/FESTSTOFFGEMISCHEN**
METHOD FOR THE MATERIAL SEPARATION OF LIQUID/SOLID MIXTURES
PROCEDE DE SEPARATION DES SUBSTANCES CONSTITUANT DES MELANGES LIQUIDE-SOLIDES

(30) Priorität: 31.07.1998 DE 19834613
(43) Veröffentlichungstag der Anmeldung: 23.05.2001
(73) Patentinhaber: Messer Griesheim GmbH, 65933 Frankfurt am Main (DE)
(72) Erfinder: GAEHRS, Hans-Jasper, D-40474 Düsseldorf (DE); BERGER, Thomas, D-45219 Essen (DE); LINGLER, Klaus, D-41238 Mönchengladbach (DE)
(86) Internationale Anmeldenummer: EP9905017
(87) Internationale Veröffentlichungsnummer: WO00007690

(56) Entgegenhaltungen:
- EP-A- 0 198 705
- EP-A- 0 292 888
- FR-A- 2 316 995
- US-A- 2 795 332
- US-A- 4 449 826

## Beschreibung

Die Erfindung betrifft ein Verfahren zum pneumatischen oder hydraulischen Abtrennen einer Flüssigkeit aus einem Flüssigkeits-/Feststoffgemisch, bei dem das Flüssigkeits-/Feststoffgemisch einem Druckbehälter zugeführt und im Druckbehälter zur Erzeugung eines hohen Drucks mit einem Gas beaufschlagt wird.

Unter dem Begriff " Flüssigkeiten" sind hier alle flüssigen Stoffe oder durch Gase unter hohen Drücken verflüssigbaren Stoffe zu verstehen.

Es sind zahlreiche Methoden zur stofflichen Trennung von Flüssigkeiten und Feststoffen bekannt. Eine Trennung kann durch Herauslösen mit Hilfe von Lösungsmitteln (Wäsche), thermisch/destillative Verfahren oder durch mechanisches Auspressen durchgeführt werden. Bekannt sind ferner Extraktionsverfahren, beispielsweise beim Entölen von Schlämmen mit verflüssigten Gasen ("Technology Screening Guide for Treatment of CERCLA Soils and Sludges - Appendix B.1: Chemical Extraction", EPA 09/01/1988; "Extraktive Trennung von Ölen aus Schleifrückständen und Metallbearbeitungsrückständen mit überkritischen Gasen", N. Dahmen et al., KFK-Nachrichten, Jahrgang 26, 2/1994, Seiten 128-132). Bei diesen Verfahren wird sowohl flüssiges als auch überkritisches Kohlendioxid als Lösungsmittel, gegebenenfalls mit einer organischen Zusatzkomponente, eingesetzt.

Diese Verfahren haben unterschiedlichste Nachteile und Einschränkungen: Rein mechanisches Auspressen führt zu relativ geringen Trennungsgraden. Eine Lösungsmittelwäsche ist aufwendig und erfordert Folgeschritte zur Trennung der Lösungsmittel von den Flüssigkeiten und Feststoffen. Thermisch/destillative Verfahren erreichen hohe Trennungsgrade, aber aufgrund der in der Regel benötigten hohen Temperaturen können diese Verfahren zur Trennung temperaturempfindlicher Flüssigkeiten nicht oder nur bedingt eingesetzt werden. Bei einer Trennung von beispielsweise Öl-/Feststoffgemischen können wertvolle Additive des Öls zerstört werden. Die Qualität des abgetrennten Öls wird so stark verschlechtert, daß vor einer weiteren Verwendung des Öls Additive wieder zudosiert werden müssen. Bei der Hochdruckextraktion mit gasförmigen Lösungsmitteln ist der Prozeß durch die relativ geringe Löslichkeit von insbesondere höhermolekularen Komponentenölen relativ zeitaufwendig und damit wirtschaftlich oft unattraktiv. Das ist im Bereich des Recyclings von zum Beispiel ölhaltigen Abfallschlämmen für eine ökologisch sinnvolle Wiedergewinnung der Gemischkomponenten besonders hinderlich.

Aus der EP 0 292 888 A2 ist ein Verfahren zur Druckfiltration bekannt. Aus einer Suspension werden dabei flüssige und feste Bestandteile dadurch getrennt, dass die Suspension unter hohem Druck gegen eine oder mehrere Filterflächen gepresst werden, wobei die festen Bestandteile von der Filterfläche festgehalten werden, während die viskosen Bestandteile die Filterfläche durchdringen können. Die zu einer solchen Druckfiltration eingesetzten Anlagen benötigen jedoch spezielle und aufwändige Filtermaterialien, aus denen die Filterflächen gebildet werden.

Aufgabe der vorliegenden Erfindung ist es, ein wirtschaftliches Verfahren zum Abtrennen von Flüssigkeiten aus einem Flüssigkeits-/Feststoffgemisch bereitzustellen, das es ermöglichst, die einzelnen Gemischkomponenten getrennt in direkt weiter- bzw. wiederverwertbarer Form zu gewinnen. Mit Hilfe des Verfahrens soll eine weitgehende Abtrennung der Flüssigkeiten aus dem Gemisch sichergestellt werden, ohne die Nachteile der bekannten Verfahren in Kauf nehmen zu müssen.

Gelöst wird diese Aufgabe gemäß Anspruch 1 dadurch, dass durch die Steuerung des Drucks im Druckbehälter und des Gaseintrags in den Druckbehälter aus dem Flüssigkeits-/Festkörpergemisch ein weitgehend homogenisierter Filterkuchen gebildet wird, der einen hohen Filterwiderstand gegen den Durchfluss des Gases bildet, wodurch die Flüssigkeit aus dem Flüssigkeits-Feststoffgemisch ausgepresst wird.

Unter dem Begriff "Gas" sind alle gasförmigen, überkritischen oder fluiden Gase oder Gasgemische zu verstehen. Für bestimmte Anwendungsfälle werden vorzugsweise überkritische Gase eingesetzt. Die Erzeugung eines "hohen Drucks" bedeutet hier Erzeugung eines Drucks, der deutlich über Atmosphärendruck (1 bar), vorzugsweise über 50 bar liegt. Die Regelung des Gaseintrags in den Druckbehälter erfolgt zum Beispiel durch eine Druckmessung oberhalb und unterhalb des Filterkuchens, vorzugsweise mit Hilfe einer Differenzdruckmessung. Durch die Homogenisierung wird das Flüssigkeits-/Feststoffgemisch gegen Gasdurchfluß widerstandsfähig. Hohlräume und Kapilare sind fast nicht mehr vorhanden, so daß das homogenisierte Flüssigkeits-/Feststoffgemisch wie ein Filterkuchen pneumatisch oder hydraulisch ausgepreßt wird.

Nach der Erfindung wird ein Gas, vorzugsweise Kohlendioxid, eingesetzt, das die Viskosität der Flüssigkeit reduziert. Diese Viskositätsveränderung unterstützt die Homogenisierung des Flüssigkeits-/Feststoffgemisches. Mit einem Gas, insbesondere mit Kohlendioxid, läßt sich eine besonders gute Homogenisierung erreichen.

Es ist nach der Erfindung vorgesehen, daß das Gas im wesentlichen von oben auf das Flüssigkeits-/Feststoffgemisch geleitet wird. Durch diese Verfahrenführung ist die Effektivität des verwendeten Gases des pneumatischen oder hydraulischen Abtrennprozesses besonders gut. Der Begriff "im wesentlichen von oben" bedeutet hier, daß das Gas im Sinne einer optimalen Beeinflussung der Viskosität der Flüssigbestandteile gegebenenfalls von oben und gleichzeitig ein Teilstrom des Gases auch von unten in den Druckbehälter eingeleitet wird, wobei dieser gleichzeitige Gaseintrag auch vorteilhaft nur in einer Anfangsphase, das bedeutet in der ersten Phase des Druckaufbaus, durchgeführt werden kann und wobei anschließend das Gas nur von oben auf das Flüssigkeits-/Feststoffgemisch geleitet wird.

Erfindungsgemäß wird der Gaseintrag in den Druckbehälter so geregelt, daß der erzeugte Druck auf das Flüssigkeits-/Feststoffgemisch einen vorgegebener Wert von 60 bis 500 bar, vorzugsweise 100 bis 400 bar, besonders bevorzugt aber 200 bis 350 bar, nicht überschreitet. Der Druckaufbau kann gegebenenfalls stufenweise über ein oder mehrere Stufen erfolgen. Dabei wird der Gaseintrag in den Druckbehälter über ein oder mehrere weitere Druckstufen bis auf den vorgegebenen, endgültigen Wert eingestellt. Durch diese Druckvorstufen kann gegebenenfalls die Bildung des Filterkuchens verbessert werden. Es war überraschend, daß durch die gezielte Begrenzung des Drucks das Flüssigkeits-/Feststoffausgangsgemisch in eine Konsistenz überführt wird, die einen relativ hohen Filterwiderstand gegen den Durchfluß von Gasen in gasförmiger oder fluider Form ausbildet. Das Feststoff-/Flüssigkeitsgemisch liegt im Ausgangszustand zum Teil in Form von Agglomeraten und zum Teil als Gemisch aus Hohlräumen, den einzelnen Feststoffpartikeln und der Flüssigkeit vor. Durch die gezielte Steuerung von Druck und Gasdosierung gelingt es offenbar, über Viskositätsänderungen oder andere Effekte die Agglomerate aufzulösen und einen weitgehend homogenen Filterkuchen zu erzeugen, der den Durchfluß des Gases stark einschränkt. Bei Einsatz von insbesondere Kohlendioxid gelingt es so, den Filterkuchen durch die Regelung des Kohlendioxid-Gaseintrags gut auszupressen. Auf diese Weise werden je nach Feststoff-/Flüssigkeitsausgangsgemisch Trennungsgrade von 80 bis über 90 % erreicht.

Nach der Erfindung ist es vorgesehen, daß der Gaseintrag in den Druckbehälter so geregelt wird, daß der Durchfluß des Gases durch das Flüssigkeits-/Feststoffgemisch auf 0 bis 5 kg Gas pro kg Feststoff-/Flüssigkeitsausgangsgemisch pro Stunde begrenzt wird.

Erfindungsgemäß beträgt die Zeitdauer des gesamten Prozesses, das bedeutet die Zeitdauer von der Druckaufbringung bis zur Beendigung des Verfahrens, ca. 5 bis 30 Minuten, vorzugsweise ca. 10 bis 15 Minuten.

Gemäß der Erfindung ist es vorgesehen, daß die Temperatur im Druckbehälter so eingestellt wird, daß bei einem relativ geringen Gasdurchfluß ein relativ hoher Druckverlust über dem Flüssigkeits-/Feststoffgemisch entsteht. Dadurch wird vorteilhaft zugleich die Viskosität des Öls auf einen bestimmten Wert eingestellt.

Nach der Erfindung beträgt der Druckverlust über dem Flüssigkeits-/Feststoffgemisch 10 bis 50 bar, bevorzugt 20 bis 30 bar. Je nach den im Druckbehälter verwendeten Einbauten, zum Beispiel Einsatzkörbe oder Filterplatten, können auch deutlich höhere Druckverluste eingestellt werden.

Es wurde überraschend festgestellt, daß mit dem pneumatischen oder hydraulischen Abtrennungsprozeß insbesondere Metall- oder Glasstäube bzw. - schlämme mit beliebigem Ölgehalt sehr sicher und sehr wirtschaftlich weitgehend entölt werden können. Bei Verwendung von vorzugsweise Kohlendioxid können aus diesen ölhaltigen Abfallschlämmen, zum Beispiel Öl-/Metallschlämme aus Bohr-, Span- oder Schleifprozessen, wiederverwertbare Öle gewonnen werden. Auch ölhaltige Bohrschlämme, wie sie bei der Erdölförderung anfallen, können so vorteilhaft entölt werden. Dabei wird ein Rückstand erhalten, der problemlos recycled oder anderweitig genutzt oder kostengünstig deponiert werden kann. Der Rückstand kann auch gegebenenfalls mit den eingangs genannten Verfahren nach dem Stand der Technik weiter aufbereitet werden.

Die Erfindung wird im folgenden anhand eines Ausführungsbeispiels näher erläutert.

### Beispiel: Pneumatische Abtrennung von Öl aus einem Öl-/Metallschlammgemisch

Ein Öl-/Metallschlammgemisch mit einem Ölanteil von 20 bis 30 Gew.% wurde in einem Druckbehälter, beispielsweise mit einem Volumen von 10 bis 250 I, mit Kohlendioxid von oben mit einem Druck von 100 bis 350 bar beaufschlagt. Es bildete sich ein relativ hoher Filterwiderstand gegen den Durchfluß des Kohlendioxids, was auf eine Homogenisierung des Öl-/Metallschlammgemisches zurückzuführen ist. Der Kohlendioxid-Gaseintrag in den Druckbehälter wurde so geregelt, daß die Gaszufuhrrate 1 bis 5 kg Kohlendioxid pro kg Öl-/Metallschlammgemisch pro Stunde betrug. Die Temperatur in dem Druckbehälter betrug 40 °C bis 60 °C.

Damit konnten mehr als 500 g Öl pro kg eingeleitetem Kohlendioxid ausgetragen werden. Dies ist mehr als die zehnfache Menge an Öl, die sich unter den gegebenen Bedingungen im Kohlendioxidgas lösen läßt.

Das in den Zwischenräumen vorhandene Öl wurde nach unten aus dem Öl-/Metallschlammgemisch ausgepreßt. Der Auspreßvorgang war beendet, nachdem kein starker Druckverlust über dem Öl-/Metallschlammgemisch, das bedeutet eine Verringerung des Druckverlustes bzw. der Druckdifferenz auf Werte von ca. 0 bar bis 5 bar, auftrat.

Für eine hohe Effiziens des Prozesses ist die Regelung des Kohlendioxid-Gaseintrags, das bedeutet hier die Einstellung der Eintragsrate an Kohlendioxid während des pneumatischen Auspressens auf relativ niedrige Werte von ca. 1 bis 5 kg Kohlendioxid pro kg Öl-/Metallschlammausgangsgemisch pro Stunde, von besonderer Bedeutung, wobei die maximale Eintragsrate bestimmt wird durch den maximalen tolerierbaren Druckverlust über dem Öl-/Metallschlammgemisch im Druckbehälter. Das Auspressen kann gegebenenfalls auch statisch erfolgen, wobei das Gas nicht permanent zugeführt wird, sondern in einer ersten Phase durch eine geeignete Eintragsrate der erforderliche Auspressdruck eingestellt wird und anschließend oder nach einem relativ kurzen Zeitraum die Gaszufuhr verringert oder ganz beendet wird, wodurch das Öl durch den vorhandenen Druck ausgepreßt wird.

Im Vergleich mit der Hochdruckextraktion konnten mit dem erfindungsgemäßen Verfahren die Zeitdauer und der Bedarf an Gasmenge deutlich reduziert werden: Beispielsweise wurde ein Ölgehalt von 27% im Ausgangsgemisch in einem Zeitraum von 8 Minuten bis auf einen Ölgehalt von kleiner 10 % reduziert, während die gleiche Reduktion mit Hilfe der Hochdruckextraktion 22 Minuten lang dauerte. Für die Verringerung eines Ölgehaltes von 45,6% auf kleiner 12% wurde eine Gasmenge von 2 kg/kg Ausgangsgemisch benötigt, aber für die gleiche Verringerung betrug der Bedarf an Gasmenge bei der Hochdruckextraktion 12,6 kg.

## Patentansprüche

1. Verfahren zum pneumatischen oder hydraulischen Abtrennen einer Flüssigkeit aus einem Flüssigkeits-/Feststoffgemisch, bei dem das Flüssigkeits-/Feststoffgemisch einem Druckbehälter zugeführt und im Druckbehälter zur Erzeugung eines hohen Drucks mit einem Gas beaufschlagt wird,
**dadurch gekennzeichnet,**
**dass** durch die Steuerung des Drucks im Druckbehälter und des Gaseintrags in den Druckbehälter aus derri Flüssigkeits-/Festkörpergemisch ein weitgehend homogenisierter Filterkuchen gebildet wird, der einen hohen Filterwiderstand gegen den Durchfluss des Gases bildet, wodurch die Flüssigkeit aus dem Flüssigkeits-Feststoffgemisch ausgepresst wird.

2. Verfahren nach Anspruch 1,
**dadurch gekennzeichnet,**
**daß** ein Gas eingesetzt wird, das die Viskosität der Flüssigkeit reduziert.

3. Verfahren nach Anspruch 2,
**dadurch gekennzeichnet,**
**daß** das Gas Kohlendioxid ist.

4. Verfahren nach einem der Ansprüche 1 bis 3,
**dadurch gekennzeichnet,**
**daß** das Gas im wesentlichen von oben auf das Flüssigkeits-/Feststoffgemisch geleitet wird.

5. Verfahren nach einem der Ansprüche 1 bis 4,
**dadurch gekennzeichnet,**
**daß** der Gaseintrag in den Druckbehälter so geregelt wird, daß der erzeugte Druck auf das Flüssigkeits-/Feststoffgemisch einen vorgegebenen Wert von 100 bis 400 bar nicht überschreitet.

6. Verfahren nach Anspruch 5,
**dadurch gekennzeichnet,**
**daß** der Gaseintrag in den Druckbehälter so geregelt wird, daß der erzeugte Druck auf das Flüssigkeits-/Feststoffgemisch einen vorgegebenen Wert von 200 bis 350 bar nicht überschreitet.

7. Verfahren nach einem der Ansprüche 1 bis 6,
**dadurch gekennzeichnet,**
**daß** der Gaseintrag in den Druckbehälter so geregelt wird, daß der Durchfluß des Gases durch das Flüssigkeits-/Feststoffgemisch auf 0 bis 5 kg Gas pro kg Feststoff-/Flüssigkeitsausgangsgemisch pro Stunde begrenzt wird.

8. Verfahren nach einem der Ansprüche 1 bis 7,
**dadurch gekennzeichnet,**
**daß** die Zeitdauer von der Druckaufbringung bis zum Druckabbau und der Beendigung des Verfahrens ca. 10 bis 15 Minuten beträgt.

9. Verfahren nach einem der Ansprüche 1 bis 8,
**dadurch gekennzeichnet,**
**daß** die Temperatur im Druckbehälter so eingestellt wird, daß bei einem relativ geringen Gasdurchfluß ein relativ hoher Druckverlust über dem Flüssigkeits-/Feststoffgemisch entsteht.

10. Verfahren nach einem der Ansprüche 1 bis 9,
**dadurch gekennzeichnet,**
**daß** der Druckverlust über dem Flüssigkeits-/Feststoffgemisch 20 bis 30 bar beträgt.

11. Verwendung des Verfahrens nach einem der Ansprüche 1 bis 10 zur Abtrennung einer organischen Flüssigkeit oder Lösung.

12. Verwendung nach Anspruch 11, wobei die abzutrennende Flüssigkeit Öl ist.

13. Verwendung des Verfahrens nach einem der Ansprüche 1 bis 12 zur Abtrennung einer Flüssigkeit aus einem Metall- oder Glasstaub bzw. - Metall- oder Glasschlamm.

## Claims

1. Process for the pneumatic or hydraulic separation of a liquid from a liquid/solids mixture, in which the liquid/solids mixture is fed to a pressure vessel and in the pressure vessel is exposed to a gas to produce a high pressure, **characterized in that**, via the control of the pressure in the pressure vessel and the gas introduction into the pressure vessel, a substantially homogenized filter cake is formed from the liquid/solids mixture, which filter cake forms a high filter resistance to the flowthrough of the gas, as a result of which the liquid is expressed from the liquid/solids mixture.

2. Process according to Claim 1, **characterized in that** a gas is used which reduces the viscosity of the liquid.

3. Process according to Claim 2, **characterized in that** the gas is carbon dioxide.

4. Process according to one of Claims 1 to 3, **characterized in that** the gas is essentially passed from the top onto the liquid/solids mixture.

5. Process according to one of Claims 1 to 4, **characterized in that** the gas introduction into the pressure vessel is controlled in such a manner that the pressure produced on the liquid/solids mixture does not exceed a preset value of 100 to 400 bar.

6. Process according to Claim 5, **characterized in that** the gas introduction into the pressure vessel is controlled in such a manner that the pressure produced on the liquid/solids mixture does not exceed a preset value of 200 to 350 bar.

7. Process according to one of Claims 1 to 6, **characterized in that** the gas introduction into the pressure vessel is controlled in such a manner that the flowthrough of gas through the liquid/solids mixture is limited to 0 to 5 kg of gas per kg of solids/liquid starting mixture per hour.

8. Process according to one of Claims 1 to 7, **characterized in that** the time period from pressurization to pressure decrease and completion of the process is approximately 10 to 15 minutes.

9. Process according to one of Claims 1 to 8, **characterized in that** the temperature in the pressure vessel is set in such a manner that at a relatively low gas flowthrough, a relatively high pressure drop is formed across the liquid/solids mixture.

10. Process according to one of Claims 1 to 9, **characterized in that** the pressure drop across the liquid/solids mixture is 20 to 30 bar.

11. Use of the process according to one of Claims 1 to 10 for separating an organic liquid or solution.

12. Use according to Claim 11, with the liquid to be separated off being oil.

13. Use of the process according to one of Claims 1 to 12 for the separation of a liquid from a metal or glass dust or metal or glass sludge.

## Revendications

1. Procédé de séparation pneumatique ou hydraulique à partir d'un liquide d'un mélange liquide/solide, dans lequel on introduit le mélange liquide/solide dans un récipient sous pression et on l'alimente dans le récipient sous pression avec un gaz pour produire une pression élevée,
**caractérisé en ce que**
par le réglage de la pression dans le récipient sous pression et de l'arrivée de gaz dans le récipient sous pression on forme à partir du mélange liquide/solide un gâteau de filtration largement homogénéisé, qui forme une résistance de filtrage élevée à la pénétration du gaz, ce qui fait que le liquide est extrait par pression à partir du mélange liquide/solide.

2. Procédé selon la revendication 1,
**caractérisé en ce qu'**
on utilise un gaz qui réduit la viscosité liquide.

3. Procédé selon la revendication 2,
**caractérisé en ce que**
le gaz est l'anhydride carbonique.

4. Procédé selon l'une des revendications 1 à 3,
**caractérisé en ce que**
le gaz est introduit essentiellement par le haut sur le mélange liquide/solide.

5. Procédé selon l'une des revendications 1 à 4,
**caractérisé en ce que**
l'introduction de gaz dans le récipient sous pression est réglée de manière que la pression produite sur le mélange liquide/solide ne dépasse pas une valeur prédéterminée de 100 à 400 bars.

6. Procédé selon la revendication 5,
**caractérisé en ce que**
l'arrivée de gaz dans le récipient sous pression est réglée de manière que la pression produite sur le mélange liquide/solide ne dépasse pas une valeur prédéterminée de 200 à 350 bars.

7. Procédé selon l'une des revendications 1 à 6,
**caractérisé en ce que**
l'arrivée de gaz dans le récipient sous pression est réglée de manière que le débit de gaz à travers le mélange liquide/solide soit limitée à 0 à 5 kg/kg de mélange solide/liquide et par heure.

8. Procédé selon l'une des revendications 1 à 7,
**caractérisé en ce que**
la durée s'écoulant entre l'accumulation de la pression et la baisse de pression jusqu'à la baisse de pression et la fin du procédé s'élève à environ 10 à 15 minutes.

9. Procédé selon l'une des revendications 1 à 8,
**caractérisé en ce qu'**
on établit la température dans le récipient sous pression de manière qu'avec un débit de gaz relativement faible, il apparaisse une perte de pression relativement élevée sur le mélange liquide/solide.

10. Procédé selon l'une des revendications 1 à 9,
**caractérisé en ce que**
la perte de pression sur le mélange liquide/solide s'élève à 20 à 30 bars.

11. Utilisation du procédé selon l'une des revendications 1 à 10 pour la séparation d'un liquide ou d'une solution organique.

12. Utilisation selon la revendication 11, dans laquelle le liquide à séparer est de l'huile.

13. Utilisation du procédé selon l'une des revendications 1 à 12 pour la séparation d'un liquide à partir d'une poussière de métal ou de verre ou selon les cas d'une boue de métal ou de verre.
